# EUROPÄISCHE PATENTSCHRIFT

(11) **EP 2 237 914 B1**
(45) Veröffentlichungstag und Bekanntmachung des Hinweises auf die Patenterteilung: **28.03.2012**
(21) Anmeldenummer: 08858447.9
(22) Anmeldetag: 05.12.2008
(51) Int. Cl.: B23H 3/00

(54) **VERFAHREN ZUR BEARBEITUNG EINES METALLISCHEN BAUTEILS**
METHOD FOR MACHINING A METAL COMPONENT
PROCÉDÉ D'USINAGE D'UN ÉLÉMENT EN MÉTAL

(30) Priorität: 13.12.2007 DE 102007060071
(43) Veröffentlichungstag der Anmeldung: 13.10.2010
(73) Patentinhaber: MTU Aero Engines GmbH, 80995 München (DE)
(72) Erfinder: BAYER, Erwin, 85521 Dachau (DE); BUSSMANN, Martin, 85247 Schwabenhausen (DE); PLATZ, Albin, 86510 Ried-Baindlkirch (DE)
(86) Internationale Anmeldenummer: PCT/DE2008/002041
(87) Internationale Veröffentlichungsnummer: WO 2009/074142

(56) Entgegenhaltungen:
- EP-A2- 1 707 294
- WO-A1-2006/012852

## Beschreibung

Die vorliegende Erfindung betrifft ein Verfahren zur Bearbeitung eines metallischen Bauteils, insbesondere eines Bauteils einer Gasturbine, durch Absenken mit einem gepulsten elektrochemischen Abtragprozess, wobei das Bauteil eine endzubearbeitende Vorkontur mit unterschiedlichen Aufmaßen aufweist. Die Erfindung betrifft weiterhin Verwendungen des erfindungsgemäßen Verfahrens.

Dokument EP 1 707 292 A offenbart ein Verfahren mit den Merkmalen des Oberbegriffs des Anspruchs 1.

Verfahren zur elektrochemischen Bearbeitung eines metallischen Bauteils sind bekannt. So stellt zum Beispiel das sogenannte elektrochemische Senken ein Verfahren zum exakten und sehr präzisen Bearbeiten von Oberflächen dar. Beim elektrochemischen Senken wird in der Regel mit einer Elektrode die Oberfläche des Werkstückes bearbeitet, wobei durch elektrochemische Reaktion des Werkstückes mit dem sich zwischen dem Werkstück und der Elektrode befindlichen Elektrolyt ein Abtragen von Material am Werkstück erfolgt. Dabei wird die Elektrode als Kathode an eine Gleichstromquelle angeschlossen. Die Elektrode bewegt sich dann mit einer vorgegebenen Geschwindigkeit auf das als Anode gepolte Bauteil zu. Bei diesen so genannten ECM (Electrochemical Machining)- oder PECM (Procise Electrochemical Machining)-Verfahren ist die Breite des Arbeitsspaltes zwischen der Elektrode und dem Bauteil von wesentlicher Bedeutung. Bei üblichen Vorgängen des elektrochemischen Senkens wird mit Abständen von der Elektrode zum Werkstück gearbeitet die im Bereich von 0,1 bis 1 mm liegen können. Zum Erzeugen feinerer Strukturen und Formen kann der Abstand auf Größen im Bereich von 10 bis 100 µm und darunter abgesenkt werden. Die erfolgreiche Anwendung eines gepulsten ECM-Prozeß (PECM) erfordert jedoch in vielen Einsatzbereichen ein gleichmäßiges Aufmaß der zu bearbeitenden Bauteile. So weist zum Beispiel eine elektrochemisch hergestellte Vorkontur eines Schaufelblatts einer Gasturbine, insbesondere einer Bliskschaufel, verfahrensbedingt ein Aufmaß zwischen ca. 1 und ca. 3 mm auf. Um in diesen Fällen ein notwendiges gleichmäßiges Aufmaß herzustellen wird bisher das ungleichmäßige Aufmaß mittels Fräsen bearbeitet. Ein derartiges Verfahren ist jedoch insbesondere bei der Bearbeitung von sehr dünnen dreidimensionalen Bauteilprofilen nur sehr eingeschränkt verwendbar, da hier die Gefahr einer Beschädigung, wie zum Beispiel einer Verformung der Bauteile besteht. Zudem ist ein derartiger Verfahrensschritt relativ aufwändig und damit kostenintensiv.

Es ist daher Aufgabe der vorliegenden Erfindung ein Verfahren zur Bearbeitung eines metallischen Bauteils der eingangs genannten Art bereit zu stellen, bei dem eine einfache, präzise, bauteilschonende und schnelle Herstellung eines äquidistanten Aufmaßes einer Vorkontur oder eine entsprechende Herstellung einer Endkontur des Bauteils gewährleistet ist.

Die der Erfindung zu Grunde liegenden Aufgaben wird durch ein Verfahren mit den im Anspruch 1 dargelegten Merkmalen gelöst.

Vorteilhafte Ausgestaltungen sind in den Unteransprüchen beschrieben.

Ein erfindungsgemäßes Verfahren zur Bearbeitung eines metallischen Bauteils, insbesondere eines Bauteils einer Gasturbine, durch Absenken mit einem gepulsten elektrochemischen Abtragprozess, wobei das Bauteil eine endzubearbeitende Vorkontur mit unterschiedlichen Aufmaßen aufweist, weist folgende Verfahrensschritte auf: a) Bestimmung der unterschiedlichen Aufmaße der Vorkontur; und b) beidseitiges und gleichzeitiges Absenken mittels eines gleichzeitigen Vorschubs von jeweils mindestens einer auf unterschiedlichen Seiten des Bauteils angeordneten Elektrode wobei die Vorschubgeschwindigkeit der Elektrode im Bereich des größeren Aufmaßes der Vorkontur größer ist als die Vorschubgeschwindigkeit der Elektrode im Bereich des geringeren Aufmaßes der Vorkontur.

Durch das erfindungsgemäße Verfahren ist es möglich, ein gleichmäßiges und äquidistantes Aufmaß der Vorkontur oder eine Endkontur präzise, einfach und schnell herzustellen. Zudem ist das verwendete elektrochemische Absenkverfahren bauteilschonend, da die jeweils auf unterschiedlichen Seiten des Bauteils angeordneten Elektroden gleichmäßig aufeinander zubewegt werden. Damit ist das erfmdungsgemäße Verfahren auch zur Bearbeitung von sehr dünnen dreidimensionalen Bauteilprofilen sehr gut geeignet. Eine Verformung der Bauteile wird zuverlässig verhindert. Die Bestimmung der unterschiedlichen Aufmaße der Vorkontur kann zum Beispiel durch optische Messverfahren erfolgen. Entsprechend den Ergebnissen und insbesondere den Unterschieden in den Aufmaßen der Vorkontur wird die Vorschubgeschwindigkeit jeder Elektrode bestimmt, derart, dass die Elektroden in einem gleichen Zeitabschnitt die unterschiedlichen Weglängen bis zur vorbestimmten Vorkontur oder bis zur Endkontur zurücklegen können.

In einer vorteilhaften Ausgestaltung des erfindungsgemäßen Verfahrens ist das Bauteil ein Schaufelblatt einer Gasturbine, insbesondere ein Schaufelblatt eines integral beschaufelten Gasturbinenrotors, wobei im Verfahrensschritt b) ein beidseitiges und gleichzeitiges Absenken der Saugseitenvorkontur und der Druckseitenvorkontur des Schaufelblatts mittels des gleichzeitigen Vorschubs von jeweils mindestens einer auf der Druckseite und der Saugseite des Schaufelprofils angeordneten Elektrode erfolgt. Zudem ist wiederum die Vorschubgeschwindigkeit der Elektrode im Bereich des größeren Aufmaßes der Vorkontur größer als die Vorschubgeschwindigkeit der Elektrode im Bereich des geringeren Aufmaßes der Vorkontur. Auch hier ergibt sich der Vorteil eines beidseitigen synchronisierten Absenkens mit gleichmäßigem Druck, der Verformungen des Schaufelblatts während der Bearbeitung ausschließt. Zudem ergibt sich eine sichere Prozessführung trotz unterschiedlicher Spaltbreiten zwischen der jeweiligen Elektrode und dem Bauteil bzw. dem Schaufelblatt. Die beschriebene Ausgestaltung des erfindungsgemäßen Verfahrens erlaubt eine einfache, präzise, bauteilschonende und schnelle Bearbeitung eines äquidistanten Aufmaßes einer Vorkontur oder die entsprechende Bearbeitung einer Endkontur des Schaufelblattes. Dabei kann die Toleranz des äquidistanten Aufmasses der Vorkontur des Bauteils oder des Schaufelblattes nach Durchführung des Verfahrensschritts b) weniger als 0,5 mm betragen.

In einer weiteren vorteilhaften Ausgestaltung des erfindungsgemäßen Verfahrens werden zwei sich gegenüberliegende Elektroden verwendet, die auf das zu bearbeitende Bauteil abgesenkt werden, wobei sich das Bauteil zwischen den Elektroden befindet. Damit kann eine elastische Verbiegung des zu bearbeitenden Bauteils zuverlässig verhindert werden. Die sich gegenüberliegenden Elektroden können dabei jeweils in einem vordefinierten Winkel auf das zu bearbeitende Bauteil abgesenkt werden, so dass Bauteile mit unterschiedlicher Geometrie an Ober- und Unterseite gleichzeitig bearbeitet werden können.

In einer vorteilhaften Ausgestaltung des erfindungsgemäßen Verfahrens sind die Elektroden mit einer synchronisierten, gepulsten Stromquelle verbunden. Insbesondere bevorzugt werden alle Strompulse zwischen den Elektroden und dem Bauteil zeitlich synchron gesendet und unterscheiden sich vorzugsweise nur in der Höhe der Stromstärke. Zudem ist es vorteilhaft, wenn die Elektrolytzusammensetzung, der Elektrolytdruck, die Elektrolyttemperatur und/oder das elektrische Potenzial im Bereich der Elektroden jeweils gleich ist. Damit wird trotz der unterschiedlichen Vorschubgeschwindigkeiten der einzelnen Elektroden zuverlässig verhindert, dass es zu Ätzangriffen und Kurzschlüssen an dem zu bearbeitenden Bauteil und den Elektroden kommt. So konnte ermittelt werden, dass es zu keinem Auffahren bzw. Kurzschluss trotz Vorschubunterschieden im Bereich bis Faktor 4 kommt. Die Ausgestaltung einer gleichen Elektrolytzusammensetzung, eines gleichen Elektrolytdruckes, einer gleichen Elektrolyttemperatur und/oder eines gleichen elektrischen Potentials im Bereich der jeweiligen Elektroden bedeutet dabei, dass die genannten Parameter zwar geringfügig voneinander abweichen können, das elektrochemische Verhalten jedoch nicht beeinflusst werden darf, d. h. gleich ist.

In einer weiteren vorteilhaften Ausgestaltung des erfindungsgemäßen Verfahrens wird die endzubearbeitende Vorkontur des Bauteils elektrochemisch hergestellt. So können z. B. Schaufelblätter eines integral beschaufelten Gasturbinenrotors aus einem Rotorscheibengrundkörper durch elektrochemisches Bearbeiten hergestellt werden. Die so hergestellten Rohschaufeln weisen verfahrenstechnisch bedingt eine endzubearbeitende Vorkontur mit unterschiedlichen Aufmaßen auf. In einem weiteren Verfahrensablauf erfolgt dann die Herstellung des vorbestimmten, äquidistanten Aufmaßes der Vorkontur oder die Herstellung der Endkontur wie dies in den Verfahrensschritten a) und b) des erfindungsgemäßen Verfahrens dargelegt ist.

In einer weiteren vorteilhaften Ausgestaltung des erfindungsgemäßen Verfahrens ist die Kontur jeder Elektrode an die endzubearbeitende Vorkontur oder an die Endkontur des Bauteils angepasst. Dadurch ist es möglich, dass der Bearbeitungsschritt des beidseitigen und gleichzeitigen Absenkens sehr schnell und präzise durchgeführt werden kann.

In einer weiteren vorteilhaften Ausgestaltung des erfindungsgemäßen Verfahrens führen die Elektroden beim Absenken gemäß dem Verfahrensschritt b) oszillierende Bewegungen durch. Insbesondere in Kombination mit dem PECM-Verfahren lassen sich sehr hohe O-berflächenqualitäten erzielen, da zwischen den Pulspausen der Elektrodenspalt vollständig mit frischen, unverbrauchten Elektrolyt ausgespült werden kann. Mögliche Gasblasen und Elektrodenschlamm werden aus dem Elektrodenspalt zuverlässig abgeführt. Bei oszillierenden Elektroden wird dabei nur im Bereich des geringsten Abstandes zwischen der Elektrode und dem zu bearbeitenden Bauteil ein Strompuls abgegeben. Im Bereich des maximalen Abstandes zwischen Elektrode und zu bearbeitendem Werkstück erfolgt dann die E-lektrolytspülung.

In einer weiteren vorteilhaften Ausgestaltung des erfindungsgemäßen Verfahrens wird das Bauteil nach Durchführung des Verfahrensschritts b) bis zu einem äquidistanten Aufmaß der Vorkontur einer weiteren Feinbearbeitung mittels einem gepulsten oder nicht-gepulsten elektrochemischen Abtrag- oder Senkverfahren zur Erzielung einer Endkontur des Bauteils zugeführt. Bei diesen Endkonturen kann es sich insbesondere um so genannte strömungstechnische Oberflächen handeln, die vorzugsweise wiederum durch einen PECM-Prozess realisiert werden. Strömungstechnische Oberflächen können z. B. die Saugseite und die Druckseite einer Schaufel einer Gasturbine, insbesondere einer Schaufel eines integral beschaufelten Gasturbinenrotors sowie die zwischen den Schaufeln liegenden Ringbereiche des Rotors sein.

Verwendung findet das erfindungsgemäße Verfahren - wie im Vorstehenden beschrieben - bei der Herstellung von Triebwerksbauteilen aus Nickel-, Kobalt- oder Titanbasislegierungen, insbesondere die Herstellung von Schaufelprofilen.

Eine weitere Verwendung des erfindungsgemäßen Verfahrens - wie im Vorstehenden beschrieben - ist die Herstellung von Triebwerksbauteilen, insbesondere die Herstellung von integralen Rotorkonstruktionen. Dies betrifft insbesondere eine Rotorschaufel und eine Rotorscheibe bestehend aus einem Stück (BLISK) und integral mit einem tragenden Ring hergestellte Rotorschaufeln (BLING).

## Patentansprüche

1. Verfahren zur Bearbeitung eines metallischen Bauteils, insbesondere eines Bauteils einer Gasturbine, durch Absenken mit einem gepulsten elektrochemischen Abtragprozess, wobei das Bauteil eine endzubearbeitende Vorkontur mit unterschiedlichen Aufmaßen aufweist, **gekennzeichnet durch** folgende Verfahrensschritte:
a) Bestimmung der unterschiedlichen Aufmaße der Vorkontur; und
b) Beidseitiges und gleichzeitiges Absenken mittels eines gleichzeitigen Vorschubs von jeweils mindestens einer auf unterschiedlichen Seiten des Bauteils angeordneten Elektrode bis zur Erzielung eines vorbestimmten, äquidistanten Aufmaßes der Vorkontur, wobei die Vorschubgeschwindigkeit der Elektrode im Bereich des größeren Aufmaßes der Vorkontur größer ist als die Vorschubgeschwindigkeit der Elektrode im Bereich des geringeren Aufmaßes der Vorkontur, bis zur Erzielung eines vorbestimmten, äquidistanten Aufmaßes der Vorkontur oder bis zur Erzielung einer Endkontur des Bauteils.

2. Verfahren nach Anspruch 1, **dadurch gekennzeichnet, dass** das Bauteil ein Schaufelblatt einer Gasturbine, insbesondere eines integral beschaufelten Gasturbinenrotors ist und im Verfahrensschritt b) ein beidseitiges und gleichzeitiges Absenken der Saugseitenvorkontur und der Druckseitenvorkontur des Schaufelblatts mittels des gleichzeitigen Vorschubs von jeweils mindestens einer auf der Druckseite und der Saugseite des Schaufelprofils angeordneten Elektrode erfolgt, wobei die Vorschubgeschwindigkeit der Elektrode im Bereich des größeren Aufmaßes der Vorkontur größer ist als die Vorschubgeschwindigkeit der Elektrode im Bereich des geringeren Aufmaßes der Vorkontur.

3. Verfahren nach Anspruch 1 oder 2, **dadurch gekennzeichnet, dass** zwei sich gegenüberliegende Elektroden auf das zu bearbeitende Bauteil abgesenkt werden.

4. Verfahren nach einem der vorhergehenden Ansprüche, **dadurch gekennzeichnet, dass** die Elektroden mit einer synchronisierten, gepulsten Stromquelle verbunden sind.

5. Verfahren nach einem der vorhergehenden Ansprüche, **dadurch gekennzeichnet, dass** die Elektrolytzusammensetzung, der Elektrolytdruck, die Elektrolyttemperatur und/oder das elektrische Potential im Bereich der Elektroden jeweils gleich ist.

6. Verfahren nach einem der vorhergehenden Ansprüche, **dadurch gekennzeichnet, dass** die endzubearbeitende Vorkontur des Bauteils elektrochemisch hergestellt wird.

7. Verfahren nach einem der vorhergehenden Ansprüche, **dadurch gekennzeichnet, dass** die Toleranz des äquidistante Aufmasses der Vorkontur des Bauteils nach Durchführung des Verfahrensschritts b) weniger als 0.5 mm beträgt.

8. Verfahren nach einem der vorhergehenden Ansprüche, **dadurch gekennzeichnet, dass** die Kontur jeder Elektrode an die endzubearbeitende Vorkontur oder die Endkontur des Bauteils angepasst ist.

9. Verfahren nach einem der vorhergehenden Ansprüche, **dadurch gekennzeichnet, dass** das die Elektroden beim Absenken gemäß dem Verfahrensschritt b) oszillierende Bewegungen durchführen.

10. Verfahren nach einem der vorhergehenden Ansprüche, **dadurch gekennzeichnet, dass** das Bauteil nach Durchführung des Verfahrensschritts b)bis zur Erzielung eines äquidistanten Aufmaßes der Vorkontur einer weiteren Feinbearbeittung mittels eines gepulsten oder nicht-gepulsten elektrochemischen Abtrag- oder Senkverfahrens zur Erzielung einer Endkontur des Bauteils zugeführt wird.

11. Verwendung eines Verfahrens nach einem der vorhergehenden Ansprüche zur Herstellung von Triebwerksbauteilen aus Nickel-, Kobalt- oder Titanbasislegierungen, insbesondere zur Herstellung von Schaufelprofilen.

12. Verwendung eines Verfahrens nach einem der vorhergehenden Ansprüche zur Herstellung von Triebwerksbauteilen, insbesondere zur Herstellung von integralen RotorKonstruktionen (BLISK oder BLING).

## Claims

1. Method for processing a metallic component, in particular a component of a gas turbine, by machining with a pulsed electrochemical removal process, wherein the component has a preliminary contour, which is to be finished, with different overmeasures, **characterised by** the following method steps:
a) determination of the different overmeasures of the preliminary contour; and
b) machining on both sides and simultaneously by means of a simultaneous advance of, in each case, at least one electrode that is arranged on different sides of the component until a predetermined equidistant overmeasure of the preliminary contour is attained, wherein the speed of advance of the electrode in the region of the larger overmeasure of the preliminary contour is greater than the speed of advance of the electrode in the region of the smaller overmeasure of the preliminary contour, until a predetermined equidistant overmeasure of the preliminary contour is attained or until a final contour of the component is attained.

2. Method according to claim 1, **characterised in that** the component is a blade of a gas turbine, in particular an integrally bladed gas turbine rotor, and in method step b) machining, on both sides and simultaneously, of the suction-side preliminary contour and the pressure-side preliminary contour of the blade is effected by means of the simultaneous advance of, in each case, at least one electrode that is arranged on the pressure side and the suction side of the blade profile, wherein the speed of advance of the electrode in the region of the larger overmeasure of the preliminary contour is greater than the speed of advance of the electrode in the region of the smaller overmeasure of the preliminary contour.

3. Method according to claim 1 or 2, **characterised in that** two opposing electrodes are brought down onto the component that is to be processed.

4. Method according to one of the preceding claims, **characterised in that** the electrodes are connected to a synchronized pulsed source of current.

5. Method according to one of the preceding claims, **characterised in that** the electrolyte composition, the electrolyte pressure, the electrolyte temperature and/or the electric potential in the region of the electrodes is the same in each case.

6. Method according to one of the preceding claims, **characterised in that** the preliminary contour of the component that is to be finished is produced electrochemically.

7. Method according to one of the preceding claims, **characterised in that** the tolerance of the equidistant overmeasure of the preliminary contour of the component after carrying out method step b) amounts to less than 0.5 mm.

8. Method according to one of the preceding claims, **characterised in that** the contour of each electrode is adapted to the preliminary contour, which is to be finished, or to the final contour of the component.

9. Method according to one of the preceding claims, **characterised in that** the electrodes carry out oscillating movements during the machining in accordance with method step b).

10. Method according to one of the preceding claims, **characterised in that** after carrying out method step b) until an equidistant overmeasure of the preliminary contour is attained the component is fed for further fine processing by means of a pulsed or non-pulsed electrochemical removal or machining process in order to attain a final contour of the component.

11. Use of a method according to one of the preceding claims for producing engine components made from nickel-, cobalt- or titanium-base alloys, in particular for producing blade profiles.

12. Use of a method according to one of the preceding claims for producing engine components, in particular for producing integral rotor constructions (BLISK or BLING).

## Revendications

1. Procédé d'usinage d'un composant métallique, en particulier d'un composant d'une turbine à gaz, par creusement au moyen d'un processus d'érosion électrochimique à impulsions, ledit composant présentant un pré-contour doté de différentes surépaisseurs à soumettre à un usinage de finition, **caractérisé par** les étapes de procédé suivantes :
a) détermination des différentes surépaisseurs du pré-contour ; et
b) creusement bilatéral et simultané par avance simultanée d'au moins une électrode disposée sur différents côtés du composant, jusqu'à obtention d'une surépaisseur équidistante prédéfinie du pré-contour, la vitesse d'avance de l'électrode dans la zone de la surépaisseur la plus importante du pré-contour étant supérieure à la vitesse d'avance de l'électrode dans la zone de la surépaisseur moindre du pré-contour, jusqu'à obtention d'une surépaisseur équidistante prédéfinie du pré-contour ou jusqu'à obtention d'un contour final du composant.

2. Procédé selon la revendication 1, **caractérisé en ce que** le composant est une aube d'une turbine à gaz, en particulier d'un rotor de turbine à gaz à pales intégrées et **en ce que**, lors de l'étape de procédé b) un creusement bilatéral et simultané du pré-contour côté aspiration et du pré-contour côté refoulement de l'aube est exécuté par avance simultanée d'au moins une électrode disposée côté aspiration et côté refoulement du profil d'aube, la vitesse d'avance de l'électrode dans la zone de la surépaisseur la plus importante du pré-contour étant supérieure à la vitesse d'avance de l'électrode dans la zone de la surépaisseur moindre du pré-contour.

3. Procédé selon la revendication 1 ou la revendication 2, **caractérisé en ce que** deux électrodes opposées l'une à l'autre sont abaissées sur le composant à usiner.

4. Procédé selon l'une des revendications précédentes, **caractérisé en ce que** les électrodes sont reliées à une source de courant synchronisée à impulsions.

5. Procédé selon l'une des revendications précédentes, **caractérisé en ce que** la composition d'électrolyte, la pression d'électrolyte, la température d'électrolyte et/ou le potentiel électrique sont constants dans la zone des électrodes.

6. Procédé selon l'une des revendications précédentes, **caractérisé en ce que** le pré-contour du composant à soumettre à un usinage de finition est réalisé par un procédé électrochimique.

7. Procédé selon l'une des revendications précédentes, **caractérisé en ce que** la tolérance de la surépaisseur équidistante du pré-contour du composant est inférieure à 0,5 mm après exécution de l'étape de procédé b).

8. Procédé selon l'une des revendications précédentes, **caractérisé en ce que** le contour de chaque électrode est ajusté au pré-contour à soumettre à un usinage de finition ou au contour final du composant.

9. Procédé selon l'une des revendications précédentes, **caractérisé en ce que** les électrodes effectuent des mouvements d'oscillation lors de l'enfonçage selon l'étape de procédé b).

10. Procédé selon l'une des revendications précédentes, **caractérisé en ce qu'**après exécution de l'étape de procédé b) jusqu'à obtention d'une surépaisseur équidistante du pré-contour, le composant est soumis à un autre usinage de précision par un processus d'enlèvement de matière ou de creusement électrochimique à impulsions ou sans impulsions pour l'obtention d'un contour final du composant.

11. Utilisation d'un procédé selon l'une des revendications précédentes pour la fabrication de composants de réacteurs en nickel, cobalt ou alliages à base de titane, en particulier pour la fabrication de profils d'aubes.

12. Utilisation d'un procédé selon l'une des revendications précédentes pour la fabrication de composants de réacteurs, en particulier pour la fabrication de constructions de rotors intégrées (BLISK ou BLING).
